# EUROPEAN PATENT SPECIFICATION

(11) **EP 4 139 902 B1**
(45) Date of publication and mention of the grant of the patent: **12.08.2026**
(21) Application number: 21718612.1
(22) Date of filing: 20.04.2021
(51) Int. Cl.: G06T 15/20, G06T 17/00, G06T 19/00

(54) **METHOD FOR CREATING A VIRTUAL ENVIRONMENT RECONSTRUCTION OF AN ACTUAL LOCATION**
VERFAHREN ZUR ERZEUGUNG EINER REKONSTRUKTION DER VIRTUELLEN UMGEBUNG EINES AKTUELLEN STANDORTS
PROCÉDÉ DE CRÉATION D'UNE RECONSTRUCTION D'ENVIRONNEMENT VIRTUEL D'UN EMPLACEMENT RÉEL

(30) Priority: 20.04.2020 GB 202005670
(43) Date of publication of application: 01.03.2023
(73) Proprietor: AUMOVIO Autonomous Mobility Germany GmbH, 85057 Ingolstadt (DE)
(72) Inventor: HOY, Michael Colin, Singapore 339780 (SG)
(74) Representative: Aumovio Corporation
(86) International application number: PCT/EP2021/060155
(87) International publication number: WO 2021/214012

(56) References cited:
- HE HUANG ET AL: "An Introduction to Image Synthesis with Generative Adversarial Nets", ARXIV.ORG, CORNELL UNIVERSITY LIBRARY, 201 OLIN LIBRARY CORNELL UNIVERSITY ITHACA, NY 14853, 12 March 2018 (2018-03-12), XP081424893
- KIM SANGPIL ET AL: "Latent transformations neural network for object view synthesis", VISUAL COMPUTER, SPRINGER, BERLIN, DE, vol. 36, no. 8, 19 October 2019 (2019-10-19), pages 1663 - 1677, XP037194134, ISSN: 0178-2789, [retrieved on 20191019], DOI: 10.1007/S00371-019-01755-X
- JUNWEI FU ET AL: "Virtual View Generation Based on 3D-Dense-Attentive GAN Networks", SENSORS, vol. 19, no. 2, 16 January 2019 (2019-01-16), pages 344, XP055741706, DOI: 10.3390/s19020344

## Description

### FIELD OF THE INVENTION

The invention relates to a method for creating a virtual environment reconstruction of an actual location, such as a computer-implemented method for creating a three-dimensional virtual reality environment reconstruction of the actual location.

### BACKGROUND

Virtual reality environments or models are simulated environments created by computers. Virtual reality environments are simulated three-dimensional virtual environments made to look real and may be a reconstruction of an actual location in the real world. Virtual reality is being applied to several different fields, such as the entertainment field, for instance, in computer games, and the education field, for instance, in driving simulators or flight simulators. However, the creation of a virtual reality environment, particularly a virtual reality reconstruction of an actual location in the real world, by a human artist is an expensive and demanding process. HE HUANG ET AL: "An Introduction to Image Synthesis with Generative Adversaria1 Nets",ARXIV.ORG, CORNELL UNIVERSITY LIBRARY, 201 OLIN LIBRARY CORNELL UNIVERSITY ITHACA, NY 14853, 12 March 2018 teaches generic GAN -based image synthesis.

### SUMMARY

The present invention is defined by the appended independent claims.

An objective is to provide a method for creating a virtual environment reconstruction of an actual location that places less reliance on a human artist.

According to a first aspect of the invention, there is provided a computer-implemented method for creating a virtual environment reconstruction of an actual location, the method comprising, executing on at least one processor, the steps of: selecting an intermediate digital pose in the virtual environment reconstruction of the actual location, wherein the intermediate digital pose corresponds to an intermediate actual pose in the actual location where no intermediate actual pose sensor data is available; selecting a target digital pose in the virtual environment reconstruction of the actual location, wherein the target digital pose corresponds to a target actual pose in the actual location where target actual pose sensor data obtained at the target actual pose is available; obtaining intermediate digital scene data of an intermediate digital scene taken at the intermediate digital pose in the virtual environment reconstruction; processing the intermediate digital scene data of the intermediate digital scene; and reconstructing, using a first machine learning system, a target digital scene at the target digital pose in the virtual environment reconstruction, wherein the target digital scene corresponds to the target actual pose sensor data of the actual location obtained at the target actual pose in the actual location.

Since a machine learning system is used, a virtual environment reconstruction of an actual location may advantageously be created without direct programming instructions. In other words, less reliance is placed on a human artist. Moreover, a machine learning system may improve its performance through learning, also without direct programming instructions. This method advantageously allows a virtual environment reconstruction of an actual location to be created from data that include intermediate digital scene data of an intermediate digital scene taken at an intermediate digital pose in the virtual environment reconstruction where no intermediate actual pose sensor data is available. Advantageously, the intermediate digital pose may be any randomly selected digital pose where no actual pose sensor data is available.

Optionally, the step of obtaining the intermediate digital scene data comprises the step of obtaining intermediate digital scene RGBD data comprising data selected from the group consisting of red data, green data, blue data, depth data and combinations thereof of the intermediate digital scene. Thus, simulated three-dimensional virtual environment data may be obtained.

According to the invention, the step of processing the intermediate digital scene data comprises the step of transforming from the intermediate digital pose to the target digital pose with the intermediate digital scene data. Thus, movement from one pose to another pose may be simulated in the three-dimensional virtual environment reconstruction.

According to the invention, the step of transforming from the intermediate digital pose to the target digital pose comprises the step of inputting the intermediate digital scene data to a first geometric calculation module. Advantageously, geometric methods used to transform poses are accurate, reliable and suitable for use in simulated three-dimensional virtual environments. Moreover, geometric methods may produce spatially accurate digital scenes.

According to the invention, the step of transforming from the intermediate digital pose to the target digital pose comprises the step of inputting the intermediate digital scene data to the first machine learning system. One advantage of using a machine learning system is that the machine learning system may improve its performance through learning without direct programming instructions. Moreover, it is convenient to use the same first machine learning system to transform poses and to reconstruct the target digital scene.

Optionally, the first machine learning system comprises a first neural network system. A neural network system may advantageously be trained to work fast and produce accurate results. Moreover, a neural network system is advantageously well suited for such complex applications.

Optionally, the first machine learning system comprises a first convolutional neural network system. A convolutional neural network system may advantageously be trained to work fast and produce accurate results. Moreover, a convolutional neural network system is advantageously well suited for such complex applications.

Optionally, the step of transforming from the intermediate digital pose to the target digital pose comprises the step of inputting the intermediate digital scene data to a second machine learning system. One advantage of using a machine learning system is that the machine learning system may improve its performance through learning without direct programming instructions. Optionally, the second machine learning system comprises a second neural network system. A neural network system may advantageously be trained to work fast and produce accurate results. Moreover, a neural network system is advantageously well suited for such complex applications.

Optionally, the second machine learning system comprises a second convolutional neural network system. A convolutional neural network system may advantageously be trained to work fast and produce accurate results. Moreover, a convolutional neural network system is advantageously well suited for such complex applications.

Optionally, the step of transforming from the intermediate digital pose to the target digital pose further comprises the step of obtaining transformed intermediate digital scene RGBD data comprising data selected from the group consisting of red data, green data, blue data, depth data and combinations thereof. Thus, simulated three-dimensional virtual environment data may be obtained.

According to the invention, the step of processing the intermediate digital scene data further comprises the step of inputting the intermediate digital scene data to the first machine learning system. One advantage of using a machine learning system is that the machine learning system may improve its performance through learning without direct programming instructions.

Optionally, the step of inputting the intermediate digital scene data to the first machine learning system comprises the step of inputting the transformed intermediate digital scene RGBD data to the first machine learning system. One advantage of using a machine learning system is that the machine learning system may improve its performance through learning without direct programming instructions.

Optionally, a target image of the actual location taken at the target actual pose in the actual location comprises the target actual pose sensor data of the actual location obtained at the target actual pose in the actual location.

Optionally, the step of reconstructing the target digital scene comprises the step of obtaining target digital scene data comprising data selected from the group consisting of red data, green data, blue data, depth data and combinations thereof from the first machine learning system. Thus, simulated three-dimensional virtual environment data may be obtained from the first machine learning system. In addition, the target digital scene may advantageously be reconstructed from data that include the intermediate digital scene data of the intermediate digital scene taken at the intermediate digital pose in the virtual environment reconstruction where no intermediate actual pose sensor data is available.

According to the invention, this method further comprises the steps of: selecting a source digital pose in the virtual environment reconstruction of the actual location, wherein the source digital pose corresponds to a source actual pose in the actual location where source actual pose sensor data obtained at the source actual pose is available; and obtaining source digital scene data of a source digital scene from the source actual pose sensor data obtained at the source actual pose. Thus, simulated three-dimensional virtual environment data may be obtained.

Optionally, the step of obtaining the source digital scene data comprises the step of obtaining source digital scene RGBD data comprising data selected from the group consisting of red data, green data, blue data, depth data and combinations thereof from the source actual pose sensor data obtained at the source actual pose. The red data, green data, blue data, or depth data can be conveniently obtained from a single device, such as an RGBD camera, or multiple devices, such as an RGB camera together with a LiDAR sensor. Thus, simulated three-dimensional virtual environment data may be obtained.

Optionally, the step of obtaining the source digital scene data comprises the step of obtaining source digital scene depth data using a third machine learning system. One advantage of using a machine learning system is that the machine learning system may improve its performance through learning without direct programming instructions. Moreover, this step advantageously allows depth data to be obtained even when depth data are unavailable. The third machine learning system may also be configured to filter out noise or perform upsampling whenever necessary.

Optionally, the step of obtaining the source digital scene data comprises the step of processing, using a third machine learning system, source digital scene RGB data comprising data selected from the group consisting of red data, green data, blue data and combinations thereof of the source digital scene. One advantage of using a machine learning system is that the machine learning system may improve its performance through learning without direct programming instructions. Moreover, this step advantageously allows depth data to be obtained even when depth data are unavailable. The third machine learning system may also be configured to filter out noise or perform upsampling whenever necessary.

Optionally, the step of processing the source digital scene RGB data comprises the step of inputting the source digital scene RGB data to the third machine learning system. One advantage of using a machine learning system is that the machine learning system may improve its performance through learning without direct programming instructions. Moreover, this step advantageously allows depth data to be obtained even when depth data are unavailable.

The third machine learning system may also be configured to filter out noise or perform upsampling whenever necessary.

Optionally, the step of processing the source digital scene RGB data further comprises the step of obtaining source digital scene RGBD data comprising data selected from the group consisting of red data, green data, blue data, depth data and combinations thereof from the third machine learning system. One advantage of using a machine learning system is that the machine learning system may improve its performance through learning without direct programming instructions. Moreover, this step advantageously allows depth data to be obtained even when depth data are unavailable. The third machine learning system may also be configured to filter out noise or perform upsampling whenever necessary. Thus, simulated three-dimensional virtual environment data may be obtained.

Optionally, the third machine learning system comprises a third neural network system. A neural network system may advantageously be trained to work fast and produce accurate results. Moreover, a neural network system is advantageously well suited for such complex applications. Furthermore, a neural network system may adopt a divide and conquer strategy when it is performing upsampling of depth data.

Optionally, the third machine learning system comprises a third convolutional neural network system. A convolutional neural network system may advantageously be trained to work fast and produce accurate results. Moreover, a convolutional neural network system is advantageously well suited for such complex applications. Furthermore, a convolutional neural network system may adopt a divide and conquer strategy when it is performing upsampling of depth data.

According to the invention, this method further comprises the step of processing the source digital scene data of the source digital scene.

According to the invention, the step of processing the source digital scene data comprises the step of transforming from the source digital pose to the intermediate digital pose with the source digital scene data. Thus, movement from one pose to another pose may be simulated in the three-dimensional virtual environment reconstruction.

According to the invention, the step of transforming from the source digital pose to the intermediate digital pose comprises the step of inputting the source digital scene data to a second geometric calculation module. Advantageously, geometric methods used to transform poses are accurate, reliable and suitable for use in simulated three-dimensional virtual environments. Moreover, geometric methods may produce spatially accurate digital scenes.

According to the invention, the step of transforming from the source digital pose to the intermediate digital pose comprises the step of inputting the source digital scene data to the first machine learning system. One advantage of using a machine learning system is that the machine learning system may improve its performance through learning without direct programming instructions. Moreover, it is convenient to use the same first machine learning system to transform poses and to reconstruct the intermediate digital scene.

Optionally, the step of transforming from the source digital pose to the intermediate digital pose comprises the step of inputting the source digital scene data to a fourth machine learning system. One advantage of using a machine learning system is that the machine learning system may improve its performance through learning without direct programming instructions.

Optionally, the fourth machine learning system comprises a fourth neural network system. A neural network system may advantageously be trained to work fast and produce accurate results. Moreover, a neural network system is advantageously well suited for such complex applications.

Optionally, the fourth machine learning system comprises a fourth convolutional neural network system. A convolutional neural network system may advantageously be trained to work fast and produce accurate results. Moreover, a convolutional neural network system is advantageously well suited for such complex applications.

Optionally, the step of transforming from the source digital pose to the intermediate digital pose further comprises the step of obtaining transformed source digital scene RGBD data comprising data selected from the group consisting of red data, green data, blue data, depth data and combinations thereof. Thus, simulated three-dimensional virtual environment data may be obtained.

According to the invention, the step of processing the source digital scene data further comprises the step of inputting the source digital scene data to the first machine learning system. One advantage of using a machine learning system is that the machine learning system may improve its performance through learning without direct programming instructions.

Optionally, the step of inputting the source digital scene data comprises the step of inputting the transformed source digital scene RGBD data to the first machine learning system. One advantage of using a machine learning system is that the machine learning system may improve its performance through learning without direct programming instructions.

According to the invention, this method further comprises the step of reconstructing, using the first machine learning system, the intermediate digital scene in the virtual environment reconstruction. Thus, the intermediate digital scene may advantageously be reconstructed from data that may include the source digital scene data of the source digital scene from the source actual pose sensor data obtained at the source actual pose.

According to the invention, the step of reconstructing the intermediate digital scene comprises the step of obtaining the intermediate digital scene data from the first machine learning system. Thus, the intermediate digital scene may advantageously be reconstructed from data that may include the source digital scene data of the source digital scene from the source actual pose sensor data obtained at the source actual pose.

Optionally, the step of reconstructing the intermediate digital scene comprises the step of obtaining the intermediate digital scene data comprising data selected from the group consisting of red data, green data, blue data, depth data and combinations thereof output from the first machine learning system. Thus, simulated three-dimensional virtual environment data may be obtained from the first machine learning system. Moreover, a three-dimensional digital scene may advantageously be reconstructed from data that may include the source digital scene data of the source digital scene from the source actual pose sensor data obtained at the source actual pose.

According to the invention, this method further comprises the step of deriving an error feedback. Thus, an objective standard is advantageously provided to assess the quality of the reconstructed digital scene of the reconstructed virtual environment.

According to the invention, the step of deriving the error feedback comprises the step of comparing the target digital scene with the target actual pose sensor data. Thus, an objective standard is advantageously provided to assess the quality of the reconstructed digital scene of the reconstructed virtual environment.

Optionally, the step of deriving the error feedback comprises the step of comparing the target digital scene with the target image. Thus, an objective standard is advantageously provided to assess the quality of the reconstructed digital scene of the reconstructed virtual environment.

Optionally, the step of comparing the target digital scene with the target image comprises the step of comparing each pixel of the target digital scene with a corresponding pixel of the target image, which, advantageously, may help produce spatially accurate digital scenes.

Optionally, the step of deriving the error feedback comprises the step of assessing, using an adversarial discriminator, the quality of the target digital scene, which, advantageously, may produce more realistic or clearer digital scenes. Moreover, an objective standard is advantageously provided to assess the quality of the reconstructed digital scene of the reconstructed virtual environment.

Optionally, the adversarial discriminator comprises a generative adversarial network comprising a fifth neural network system and a sixth neural network system, which, advantageously, may produce more realistic or clearer digital scenes. Moreover, the fifth neural network system and the sixth neural network system may be trained to make the reconstructed virtual environment look similar to the actual location.

Optionally, the step of deriving the error feedback comprises the steps of: comparing the target digital scene with the target actual pose sensor data; and assessing, using an adversarial discriminator, the quality of the target digital scene. Thus, an objective standard is advantageously provided to assess the quality of the reconstructed digital scene of the reconstructed virtual environment. Moreover, more realistic or clearer digital scenes may be produced.

According to the invention, this method further comprises the step of changing parameters of the first machine learning system based on the error feedback. Thus, an objective standard is advantageously provided to train the first machine learning system.

Optionally, this method further comprises the step of creating, using the first machine learning system, a desired digital pose in the virtual environment reconstruction of the actual location, wherein the desired digital pose corresponds to a desired actual pose in the actual location where no desired actual pose sensor data is available. Advantageously, any digital pose with no available actual pose sensor data may be created to look similar to the desired actual pose using the trained first machine learning system.

Optionally, the step of creating the desired digital pose comprises the step of determining a proximate digital pose in the virtual environment reconstruction of the actual location, wherein the proximate digital pose corresponds to a proximate actual pose in the actual location where proximate actual pose sensor data obtained at the proximate actual pose is available. Advantageously, any nearby actual pose with available actual pose sensor data may be used to create the desired digital pose to look similar to the desired actual pose.

Optionally, the proximate digital pose is the digital pose with available actual pose sensor data that is nearest to the desired digital pose. Advantageously, a nearest actual pose with available actual pose sensor data may be suitable to be used to create the desired digital pose to look similar to the desired actual pose.

Optionally, the step of creating the desired digital pose further comprises the step of obtaining proximate digital scene data of a proximate digital scene from the proximate actual pose sensor data obtained at the proximate actual pose. Thus, simulated three-dimensional virtual environment data may be obtained.

Optionally, the step of obtaining the proximate digital scene data comprises the step of obtaining proximate digital scene RGBD data comprising data selected from the group consisting of red data, green data, blue data, depth data and combinations thereof from the proximate actual pose sensor data obtained at the proximate actual pose. The red data, green data, blue data, or depth data can be conveniently obtained from a single device, such as an RGBD camera, or multiple devices, such as an RGB camera together with a LiDAR sensor. Thus, simulated three-dimensional virtual environment data may be obtained.

Optionally, the step of obtaining the proximate digital scene data comprises the step of obtaining proximate digital scene depth data using a fifth machine learning system. One advantage of using a machine learning system is that the machine learning system may improve its performance through learning without direct programming instructions. Moreover, this step advantageously allows depth data to be obtained even when depth data are unavailable. The trained fifth machine learning system may also be configured to filter out noise or perform upsampling whenever necessary.

Optionally, the fifth machine learning system comprises a fifth neural network system. A neural network system may advantageously be trained to work fast and produce accurate results. Moreover, a neural network system is advantageously well suited for such complex applications. Furthermore, a neural network system may adopt a divide and conquer strategy when it is performing upsampling of depth data.

Optionally, the fifth machine learning system comprises a fifth convolutional neural network system. A convolutional neural network system may advantageously be trained to work fast and produce accurate results. Moreover, a convolutional neural network system is advantageously well suited for such complex applications. Furthermore, a convolutional neural network system may adopt a divide and conquer strategy when it is performing upsampling of depth data.

Optionally, the step of obtaining the proximate digital scene data comprises the step of processing, using a sixth machine learning system, proximate digital scene RGB data comprising data selected from the group consisting of red data, green data, blue data and combinations thereof of the proximate digital scene. One advantage of using a machine learning system is that the machine learning system may improve its performance through learning without direct programming instructions. Moreover, this step advantageously allows depth data to be obtained even when depth data are unavailable. The trained sixth machine learning system may also be configured to filter out noise or perform upsampling whenever necessary.

Optionally, the step of processing the proximate digital scene RGB data comprises the step of inputting the proximate digital scene RGB data to the sixth machine learning system. One advantage of using a machine learning system is that the machine learning system may improve its performance through learning without direct programming instructions. Moreover, this step advantageously allows depth data to be obtained even when depth data are unavailable. The trained sixth machine learning system may also be configured to filter out noise or perform upsampling whenever necessary.

Optionally, the step of processing the proximate digital scene RGB data further comprises the step of obtaining proximate digital scene RGBD data comprising data selected from the group consisting of red data, green data, blue data, depth data and combinations thereof from the sixth machine learning system. One advantage of using a machine learning system is that the machine learning system may improve its performance through learning without direct programming instructions. Moreover, this step advantageously allows depth data to be obtained even when depth data are unavailable. The trained sixth machine learning system may also be configured to filter out noise or perform upsampling whenever necessary. Thus, simulated three-dimensional virtual environment data may be obtained.

Optionally, the sixth machine learning system comprises a sixth neural network system. A neural network system may advantageously be trained to work fast and produce accurate results. Moreover, a neural network system is advantageously well suited for such complex applications. Furthermore, a neural network system may adopt a divide and conquer strategy when it is performing upsampling of depth data.

Optionally, the sixth machine learning system comprises a sixth convolutional neural network system. A convolutional neural network system may advantageously be trained to work fast and produce accurate results. Moreover, a convolutional neural network system is advantageously well suited for such complex applications. Furthermore, a convolutional neural network system may adopt a divide and conquer strategy when it is performing upsampling of depth data.

Optionally, the step of creating the desired digital pose further comprises the step of processing the proximate digital scene data of the proximate digital scene.

Optionally, the step of processing the proximate digital scene data comprises the step of transforming from the proximate digital pose to the desired digital pose with the proximate digital scene data. Thus, movement from one pose to another pose may be simulated in the three-dimensional virtual environment reconstruction.

Optionally, the step of transforming from the proximate digital pose to the desired digital pose comprises the step of inputting the proximate digital scene data to a third geometric calculation module. Advantageously, geometric methods used to transform poses are accurate, reliable and suitable for use in simulated three-dimensional virtual environments. Moreover, geometric methods may produce spatially accurate digital scenes.

Optionally, the step of transforming from the proximate digital pose to the desired digital pose comprises the step of inputting the proximate digital scene data to the first machine learning system. One advantage of using a machine learning system is that the machine learning system may improve its performance through learning without direct programming instructions. Furthermore, a trained machine learning system may perform such complex operations fast and accurately. Moreover, it is convenient to use the same trained first machine learning system to transform poses and to reconstruct digital scenes.

Optionally, the step of transforming from the proximate digital pose to the desired digital pose comprises the step of inputting the proximate digital scene data to a seventh machine learning system. One advantage of using a machine learning system is that the machine learning system may improve its performance through learning without direct programming instructions. Furthermore, a trained machine learning system may perform such complex operations fast and accurately.

Optionally, the seventh machine learning system comprises a seventh neural network system. A neural network system may advantageously be trained to work fast and produce accurate results. Moreover, a neural network system is advantageously well suited for such complex applications. Furthermore, a neural network system may adopt a divide and conquer strategy when it is performing upsampling of depth data.

Optionally, the seventh machine learning system comprises a seventh convolutional neural network system. A convolutional neural network system may advantageously be trained to work fast and produce accurate results. Moreover, a convolutional neural network system is advantageously well suited for such complex applications. Furthermore, a convolutional neural network system may adopt a divide and conquer strategy when it is performing upsampling of depth data.

Optionally, the step of transforming from the proximate digital pose to the desired digital pose further comprises the step of obtaining transformed proximate digital scene RGBD data comprising data selected from the group consisting of red data, green data, blue data, depth data and combinations thereof. Thus, simulated three-dimensional virtual environment data may be obtained.

Optionally, the step of processing the proximate digital scene data further comprises the step of inputting the proximate digital scene data to the first machine learning system.

Optionally, the step of inputting the proximate digital scene data comprises the step of inputting the transformed proximate digital scene RGBD data to the first machine learning system.

Optionally, the step of creating the desired digital pose further comprises the step of reconstructing, using the first machine learning system, a desired digital scene in the virtual environment reconstruction. One advantage of using a machine learning system is that the machine learning system may improve its performance through learning without direct programming instructions. Furthermore, a trained machine learning system may perform such complex operations fast and accurately.

Optionally, the step of reconstructing the desired digital scene comprises the step of obtaining desired digital scene data from the first machine learning system. One advantage of using a machine learning system is that the machine learning system may improve its performance through learning without direct programming instructions. Furthermore, a trained machine learning system may perform such complex operations fast and accurately after it has been trained.

Optionally, the step of reconstructing the desired digital scene comprises the step of obtaining the desired digital scene data comprising data selected from the group consisting of red data, green data, blue data, depth data and combinations thereof output from the first machine learning system. Thus, simulated three-dimensional virtual environment data may be obtained from the trained first machine learning system. Moreover, a three-dimensional digital scene may advantageously be reconstructed from data that may include the proximate digital scene data of the proximate digital scene from the proximate actual pose sensor data obtained at the proximate actual pose.

Any feature or step disclosed in the context of the first aspect of the invention may also be used, to the extent possible, in combination with and/or in the context of other aspects of the invention, and in the inventions generally.

According to a second aspect of the invention, there is provided a computer-implemented method for creating a virtual environment reconstruction of an actual location, the method comprising the steps of: selecting, by a processor, an intermediate digital pose in the virtual environment reconstruction of the actual location, wherein the intermediate digital pose corresponds to an intermediate actual pose in the actual location where no intermediate actual pose sensor data is available; selecting, by the processor, a target digital pose in the virtual environment reconstruction of the actual location, wherein the target digital pose corresponds to a target actual pose in the actual location where target actual pose sensor data obtained at the target actual pose is available; obtaining, by the processor, intermediate digital scene data of an intermediate digital scene taken at the intermediate digital pose in the virtual environment reconstruction; processing, by the processor, the intermediate digital scene data of the intermediate digital scene; and reconstructing, by the processor, using a first machine learning system, a target digital scene at the target digital pose in the virtual environment reconstruction, wherein the target digital scene corresponds to the target actual pose sensor data of the actual location obtained at the target actual pose in the actual location.

Since a machine learning system is used, a virtual environment reconstruction of an actual location may advantageously be created without direct programming instructions. In other words, less reliance is placed on a human artist. Moreover, a machine learning system may improve its performance through learning, also without direct programming instructions. This method advantageously allows a virtual environment reconstruction of an actual location to be created from data that include intermediate digital scene data of an intermediate digital scene taken at an intermediate digital pose in the virtual environment reconstruction where no intermediate actual pose sensor data is available. Advantageously, the intermediate digital pose may be any randomly selected digital pose where no actual pose sensor data is available.

Any feature or step disclosed in the context of any other aspect of the invention may also be used, to the extent possible, in combination with and/or in the context of the second aspect of the invention, and in the inventions generally.

According to a third aspect of the invention, there is provided a computer-implemented method for creating a virtual environment reconstruction of an actual location, comprising executing on a processor the steps of: selecting an intermediate digital pose in the virtual environment reconstruction of the actual location, wherein the intermediate digital pose corresponds to an intermediate actual pose in the actual location where no intermediate actual pose sensor data is available; selecting a target digital pose in the virtual environment reconstruction of the actual location, wherein the target digital pose corresponds to a target actual pose in the actual location where target actual pose sensor data obtained at the target actual pose is available; obtaining intermediate digital scene data of an intermediate digital scene taken at the intermediate digital pose in the virtual environment reconstruction; processing the intermediate digital scene data of the intermediate digital scene; and reconstructing, using a first machine learning system, a target digital scene at the target digital pose in the virtual environment reconstruction, wherein the target digital scene corresponds to the target actual pose sensor data of the actual location obtained at the target actual pose in the actual location.

Since a machine learning system is used, a virtual environment reconstruction of an actual location may advantageously be created without direct programming instructions. In other words, less reliance is placed on a human artist. Moreover, a machine learning system may improve its performance through learning, also without direct programming instructions. This method advantageously allows a virtual environment reconstruction of an actual location to be created from data that include intermediate digital scene data of an intermediate digital scene taken at an intermediate digital pose in the virtual environment reconstruction where no intermediate actual pose sensor data is available. Advantageously, the intermediate digital pose may be any randomly selected digital pose where no actual pose sensor data is available.

Any feature or step disclosed in the context of any other aspect of the invention may also be used, to the extent possible, in combination with and/or in the context of the third aspect of the invention, and in the inventions generally.

According to a fourth aspect of the invention, there is provided a non-transitory computer-readable medium with instructions stored thereon, that when executed by a processor, performs a method for creating a virtual environment reconstruction of an actual location, wherein the method comprises the steps of: selecting an intermediate digital pose in the virtual environment reconstruction of the actual location, wherein the intermediate digital pose corresponds to an intermediate actual pose in the actual location where no intermediate actual pose sensor data is available; selecting a target digital pose in the virtual environment reconstruction of the actual location, wherein the target digital pose corresponds to a target actual pose in the actual location where target actual pose sensor data obtained at the target actual pose is available; obtaining intermediate digital scene data of an intermediate digital scene taken at the intermediate digital pose in the virtual environment reconstruction; processing the intermediate digital scene data of the intermediate digital scene; and reconstructing, using a first machine learning system, a target digital scene at the target digital pose in the virtual environment reconstruction, wherein the target digital scene corresponds to the target actual pose sensor data of the actual location obtained at the target actual pose in the actual location.

Since a machine learning system is used, a virtual environment reconstruction of an actual location may advantageously be created without direct programming instructions. In other words, less reliance is placed on a human artist. Moreover, a machine learning system may improve its performance through learning, also without direct programming instructions. This method advantageously allows a virtual environment reconstruction of an actual location to be created from data that include intermediate digital scene data of an intermediate digital scene taken at an intermediate digital pose in the virtual environment reconstruction where no intermediate actual pose sensor data is available. Advantageously, the intermediate digital pose may be any randomly selected digital pose where no actual pose sensor data is available.

Any feature or step disclosed in the context of any other aspect of the invention may also be used, to the extent possible, in combination with and/or in the context of the fourth aspect of the invention, and in the inventions generally.

According to a fifth aspect of the invention, there is provided a method for creating a three-dimensional virtual reality environment reconstruction of an actual location, the method comprising the steps of: selecting a source digital pose in the three-dimensional virtual reality environment reconstruction of the actual location, wherein the source digital pose corresponds to a source actual pose in the actual location where source actual pose sensor data obtained at the source actual pose is available; selecting an intermediate digital pose in the three-dimensional virtual reality environment reconstruction of the actual location, wherein the intermediate digital pose corresponds to an intermediate actual pose in the actual location where no intermediate actual pose sensor data is available; selecting a target digital pose in the three-dimensional virtual reality environment reconstruction of the actual location, wherein the target digital pose corresponds to a target actual pose in the actual location where target actual pose sensor data obtained at the target actual pose is available; obtaining source digital scene data of a source digital scene from the source actual pose sensor data obtained at the source actual pose; wherein the step of obtaining the source digital scene data comprises the step of obtaining source digital scene RGBD data comprising data selected from the group consisting of red data, green data, blue data, depth data and combinations thereof from the source actual pose sensor data obtained at the source actual pose; transforming from the source digital pose to the intermediate digital pose with the source digital scene data; wherein the step of transforming from the source digital pose to the intermediate digital pose comprises the steps of: inputting the source digital scene data to a first geometric calculation module or a first machine learning system; wherein the first machine learning system comprises a first neural network system; and obtaining transformed source digital scene RGBD data comprising data selected from the group consisting of red data, green data, blue data, depth data and combinations thereof; inputting the source digital scene data to the first machine learning system; wherein the step of inputting the source digital scene data comprises the step of inputting the transformed source digital scene RGBD data to the first machine learning system; reconstructing, using the first machine learning system, the intermediate digital scene in the three-dimensional virtual reality environment reconstruction; wherein the step of reconstructing the intermediate digital scene comprises the step of obtaining intermediate digital scene data comprising data selected from the group consisting of red data, green data, blue data, depth data and combinations thereof output from the first machine learning system; obtaining the intermediate digital scene data of an intermediate digital scene taken at the intermediate digital pose in the three-dimensional virtual reality environment reconstruction; transforming from the intermediate digital pose to the target digital pose with the intermediate digital scene data; wherein the step of transforming from the intermediate digital pose to the target digital pose comprises the steps of: inputting the intermediate digital scene data to a second geometric calculation module or the first machine learning system; and obtaining transformed intermediate digital scene RGBD data comprising data selected from the group consisting of red data, green data, blue data, depth data and combinations thereof; inputting the intermediate digital scene data to the first machine learning system; wherein the step of inputting the intermediate digital scene data to the first machine learning system comprises the step of inputting the transformed intermediate digital scene RGBD data to the first machine learning system; reconstructing, using the first machine learning system, a target digital scene at the target digital pose in the three-dimensional virtual reality environment reconstruction, wherein the target digital scene corresponds to the target actual pose sensor data of the actual location obtained at the target actual pose in the actual location, wherein: a target image of the actual location taken at the target actual pose in the actual location comprises the target actual pose sensor data of the actual location obtained at the target actual pose in the actual location; and the step of reconstructing the target digital scene comprises the step of obtaining target digital scene data comprising data selected from the group consisting of red data, green data, blue data, depth data and combinations thereof from the first machine learning system; deriving an error feedback; wherein the step of deriving the error feedback comprises the steps of: comparing the target digital scene with the target actual pose sensor data; wherein the step of comparing the target digital scene with the target actual pose sensor data comprises the step of comparing each pixel of the target digital scene with a corresponding pixel of the target image; and assessing, using an adversarial discriminator, the quality of the target digital scene; wherein the adversarial discriminator comprises a generative adversarial network comprising a second neural network system and a third neural network system; and changing parameters of the first machine learning system based on the error feedback.

Optionally, this method further comprises the step of creating, using the first machine learning system, a desired digital pose in the three-dimensional virtual reality environment reconstruction of the actual location, wherein the desired digital pose corresponds to a desired actual pose in the actual location where no desired actual pose sensor data is available, wherein the step of creating the desired digital pose comprises the steps of: determining a proximate digital pose in the three-dimensional virtual reality environment reconstruction of the actual location, wherein the proximate digital pose corresponds to a proximate actual pose in the actual location where proximate actual pose sensor data obtained at the proximate actual pose is available; wherein the proximate digital pose is the digital pose with available actual pose sensor data that is nearest to the desired digital pose; obtaining proximate digital scene data of a proximate digital scene from the proximate actual pose sensor data obtained at the proximate actual pose; wherein the step of obtaining the proximate digital scene data comprises the step of obtaining proximate digital scene RGBD data comprising data selected from the group consisting of red data, green data, blue data, depth data and combinations thereof from the proximate actual pose sensor data obtained at the proximate actual pose; transforming from the proximate digital pose to the desired digital pose with the proximate digital scene data, wherein the step of transforming from the proximate digital pose to the desired digital pose comprises the steps of: inputting the proximate digital scene data to a third geometric calculation module or the first machine learning system; and obtaining transformed proximate digital scene RGBD data comprising data selected from the group consisting of red data, green data, blue data, depth data and combinations thereof; inputting the proximate digital scene data to the first machine learning system; wherein the step of inputting the proximate digital scene data comprises the step of inputting the transformed proximate digital scene RGBD data to the first machine learning system; and reconstructing, using the first machine learning system, a desired digital scene in the three-dimensional virtual reality environment reconstruction; wherein the step of reconstructing the desired digital scene comprises the step of obtaining desired digital scene data comprising data selected from the group consisting of red data, green data, blue data, depth data and combinations thereof output from the first machine learning system.

Any feature or step disclosed in the context of any other aspect of the invention may also be used, to the extent possible, in combination with and/or in the context of the fifth aspect of the invention, and in the inventions generally.

According to a sixth aspect of the invention, there is provided a method for creating a virtual environment reconstruction of an actual location, the method comprising the steps of: selecting an intermediate digital pose in the virtual environment reconstruction of the actual location, wherein the intermediate digital pose corresponds to an intermediate actual pose in the actual location where no intermediate actual pose sensor data is available; selecting a target digital pose in the virtual environment reconstruction of the actual location, wherein the target digital pose corresponds to a target actual pose in the actual location where target actual pose sensor data obtained at the target actual pose is available; obtaining intermediate digital scene data of an intermediate digital scene taken at the intermediate digital pose in the virtual environment reconstruction; processing the intermediate digital scene data of the intermediate digital scene; and reconstructing, using a first machine learning system, a target digital scene at the target digital pose in the virtual environment reconstruction, wherein the target digital scene corresponds to the target actual pose sensor data of the actual location obtained at the target actual pose in the actual location.

Since a machine learning system is used, a virtual environment reconstruction of an actual location may advantageously be created without direct programming instructions. In other words, less reliance is placed on a human artist. Moreover, a machine learning system may improve its performance through learning, also without direct programming instructions. This method advantageously allows a virtual environment reconstruction of an actual location to be created from data that include intermediate digital scene data of an intermediate digital scene taken at an intermediate digital pose in the virtual environment reconstruction where no intermediate actual pose sensor data is available. Advantageously, the intermediate digital pose may be any randomly selected digital pose where no actual pose sensor data is available.

Any feature or step disclosed in the context of any other aspect of the invention may also be used, to the extent possible, in combination with and/or in the context of the sixth aspect of the invention, and in the inventions generally.

According to a seventh aspect of the invention, there is provided a computer-implemented method for creating a three-dimensional virtual reality environment reconstruction of an actual location, the method comprising, executing on at least one processor, the steps of: selecting a source digital pose in the three-dimensional virtual reality environment reconstruction of the actual location, wherein the source digital pose corresponds to a source actual pose in the actual location where source actual pose sensor data obtained at the source actual pose is available; selecting an intermediate digital pose in the three-dimensional virtual reality environment reconstruction of the actual location, wherein the intermediate digital pose corresponds to an intermediate actual pose in the actual location where no intermediate actual pose sensor data is available; selecting a target digital pose in the three-dimensional virtual reality environment reconstruction of the actual location, wherein the target digital pose corresponds to a target actual pose in the actual location where target actual pose sensor data obtained at the target actual pose is available; obtaining source digital scene data of a source digital scene from the source actual pose sensor data obtained at the source actual pose; wherein the step of obtaining the source digital scene data comprises the step of obtaining source digital scene RGBD data comprising data selected from the group consisting of red data, green data, blue data, depth data and combinations thereof from the source actual pose sensor data obtained at the source actual pose; transforming from the source digital pose to the intermediate digital pose with the source digital scene data; wherein the step of transforming from the source digital pose to the intermediate digital pose comprises the steps of: inputting the source digital scene data to a first geometric calculation module or a first machine learning system; wherein the first machine learning system comprises a first neural network system; and obtaining transformed source digital scene RGBD data comprising data selected from the group consisting of red data, green data, blue data, depth data and combinations thereof; inputting the source digital scene data to the first machine learning system; wherein the step of inputting the source digital scene data comprises the step of inputting the transformed source digital scene RGBD data to the first machine learning system; reconstructing, using the first machine learning system, the intermediate digital scene in the three-dimensional virtual reality environment reconstruction; wherein the step of reconstructing the intermediate digital scene comprises the step of obtaining intermediate digital scene data comprising data selected from the group consisting of red data, green data, blue data, depth data and combinations thereof output from the first machine learning system; obtaining the intermediate digital scene data of an intermediate digital scene taken at the intermediate digital pose in the three-dimensional virtual reality environment reconstruction; transforming from the intermediate digital pose to the target digital pose with the intermediate digital scene data; wherein the step of transforming from the intermediate digital pose to the target digital pose comprises the steps of: inputting the intermediate digital scene data to a second geometric calculation module or the first machine learning system; and obtaining transformed intermediate digital scene RGBD data comprising data selected from the group consisting of red data, green data, blue data, depth data and combinations thereof; inputting the intermediate digital scene data to the first machine learning system; wherein the step of inputting the intermediate digital scene data to the first machine learning system comprises the step of inputting the transformed intermediate digital scene RGBD data to the first machine learning system; reconstructing, using the first machine learning system, a target digital scene at the target digital pose in the three-dimensional virtual reality environment reconstruction, wherein the target digital scene corresponds to the target actual pose sensor data of the actual location obtained at the target actual pose in the actual location, wherein: a target image of the actual location taken at the target actual pose in the actual location comprises the target actual pose sensor data of the actual location obtained at the target actual pose in the actual location; and the step of reconstructing the target digital scene comprises the step of obtaining target digital scene data comprising data selected from the group consisting of red data, green data, blue data, depth data and combinations thereof from the first machine learning system; deriving an error feedback; wherein the step of deriving the error feedback comprises the steps of: comparing the target digital scene with the target actual pose sensor data; wherein the step of comparing the target digital scene with the target actual pose sensor data comprises the step of comparing each pixel of the target digital scene with a corresponding pixel of the target image; and assessing, using an adversarial discriminator, the quality of the target digital scene; wherein the adversarial discriminator comprises a generative adversarial network comprising a second neural network system and a third neural network system; and changing parameters of the first machine learning system based on the error feedback.

Optionally, this method further comprises the step of creating, using the first machine learning system, a desired digital pose in the three-dimensional virtual reality environment reconstruction of the actual location, wherein the desired digital pose corresponds to a desired actual pose in the actual location where no desired actual pose sensor data is available, wherein the step of creating the desired digital pose comprises the steps of: determining a proximate digital pose in the three-dimensional virtual reality environment reconstruction of the actual location, wherein the proximate digital pose corresponds to a proximate actual pose in the actual location where proximate actual pose sensor data obtained at the proximate actual pose is available; wherein the proximate digital pose is the digital pose with available actual pose sensor data that is nearest to the desired digital pose; obtaining proximate digital scene data of a proximate digital scene from the proximate actual pose sensor data obtained at the proximate actual pose; wherein the step of obtaining the proximate digital scene data comprises the step of obtaining proximate digital scene RGBD data comprising data selected from the group consisting of red data, green data, blue data, depth data and combinations thereof from the proximate actual pose sensor data obtained at the proximate actual pose; transforming from the proximate digital pose to the desired digital pose with the proximate digital scene data, wherein the step of transforming from the proximate digital pose to the desired digital pose comprises the steps of: inputting the proximate digital scene data to a third geometric calculation module or the first machine learning system; and obtaining transformed proximate digital scene RGBD data comprising data selected from the group consisting of red data, green data, blue data, depth data and combinations thereof; inputting the proximate digital scene data to the first machine learning system; wherein the step of inputting the proximate digital scene data comprises the step of inputting the transformed proximate digital scene RGBD data to the first machine learning system; and reconstructing, using the first machine learning system, a desired digital scene in the three-dimensional virtual reality environment reconstruction; wherein the step of reconstructing the desired digital scene comprises the step of obtaining desired digital scene data comprising data selected from the group consisting of red data, green data, blue data, depth data and combinations thereof output from the first machine learning system.

Any feature or step disclosed in the context of any other aspect of the invention may also be used, to the extent possible, in combination with and/or in the context of the seventh aspect of the invention, and in the inventions generally.

As used in this summary, in the description below, in the claims below, and in the accompanying drawings, the term "volatile memory" means any type of computer memory where the contents of the memory are lost if there is no power to the computer. Random-access memory (RAM) is an example of a type of volatile memory. As used in the summary above, in this description, in the claims below, and in the accompanying drawings, the term "nonvolatile memory" or the term "non-transitory computer-readable medium" means any type of computer memory where the contents of the memory are retained even if there is no power to the computer. Hard disk and solid-state drive (SSD) are examples of types of nonvolatile memory or non-transitory computer-readable medium.

As used in this summary, in the description below, in the claims below, and in the accompanying drawings, the term "machine learning system" means a computer system that is able to learn without direct programming instructions. A machine learning system applies statistical modelling to detect patterns and to improve performance, based on data input and without direct programming instructions. A machine learning system builds a statistical model through a training or learning process, which involves inputting data to the machine learning system. The four basic categories of learning process are supervised learning using labelled data sets, unsupervised learning using unlabelled data sets, semi-supervised learning using a mix of labelled data sets and unlabelled data sets, and reinforcement learning that involves learning by trial and error. Decision tree, support vector machine and neural network are examples of types of machine learning system.

As used in this summary, in the description below, in the claims below, and in the accompanying drawings, the term "neural network" or the term "artificial neural network" means a type of machine learning algorithm that uses a web of nodes, edges and layers. The first layer of a neural network comprises input nodes that accept data inputs from a data set. The input nodes then send information through the edges to the nodes in the next layer. Each edge comprises an activation function that is alterable during a training process. The final layer of the neural network comprises the output nodes that provide data outputs of the neural network. During the training process, the data outputs of the neural network are compared to the actual outputs of the data set. The differences between the data outputs of the neural network and the actual outputs of the data set are measured and denoted as an error value. The error value is then fed back to the neural network, which changes its activation functions in order to minimise the error value. The training process is an iterative process. After the neural network has been trained, the trained neural network may then be used to predict a data output from a particular data input. Convolutional neural network is an example of a type of artificial neural network.

As used in this summary, in the description below, in the claims below, and in the accompanying drawings, the term "virtual environment" means a world created using computer software. In contrast to the real space, time and matter physical world, a virtual environment is a digital world. However, a virtual environment may be created to appear to comprise three-dimensional objects located in a three-dimensional space. A virtual environment may be a reconstruction of an actual location in the real world. Virtual reality environment is an example of a type of virtual environment.

As used in this summary, in the description below, in the claims below, and in the accompanying drawings, the term "virtual reality environment" means a virtual environment simulated by a computer to look and sound real to a user, who may interact with the virtual environment.

As used in this summary, in the description below, in the claims below, and in the accompanying drawings, the term "pose" means a particular position and orientation adopted, in the real world or in a virtual environment. A position may be defined using the commonly used mathematical notations of x axis, y axis and z axis, and an orientation may be expressed in terms of yaw angle, pitch angle and roll angle.

As used in this summary, in the description below, in the claims below, and in the accompanying drawings, the term "digital scene" means a two-dimensional or three-dimensional view of a virtual environment created using computer software.

As used in this summary, in the description below, in the claims below, and in the accompanying drawings, the term "image" means a two-dimensional or three-dimensional picture of an actual location in the real world. An image may be captured by one single image capturing device, such as a camera, or created by fusing data from several devices, such as ultrasonic sensor, LiDAR sensor, radar sensor or camera.

As used in this summary, in the description below, in the claims below, and in the accompanying drawings, when it is stated that a particular digital pose "corresponds" to a certain actual pose, it means that the particular digital pose adopted in the virtual environment reconstruction of the actual location matches a similar actual pose that would be adopted in the actual location in the real world. In other words, a certain actual position and a certain actual orientation of the actual location is simulated in the virtual environment reconstruction with a particular digital position and a particular digital orientation. Similarly, when it is stated that a particular digital scene "corresponds" to a specific image or specific actual pose sensor data, it means that the particular digital scene, either comprising a two-dimensional view or a three-dimensional view, of the virtual environment reconstruction created or reconstructed, matches an actual view, image or actual pose sensor data whether two-dimensional or three-dimensional, of the actual location in the real world. In other words, the particular digital scene is a recreation in the virtual environment of the specific image or specific actual pose sensor data.

In this summary, in the description below, in the claims below, and in the accompanying drawings, reference is made to particular features (including method steps) of the invention. It is to be understood that the disclosure of the invention in this specification includes all possible combinations of such particular features. For example, where a particular feature is disclosed in the context of a particular aspect or embodiment of the invention, or a particular claim, that feature can also be used, to the extent possible, in com-bination with and/or in the context of other particular aspects and embodiments of the invention, and in the inventions generally.

### BRIEF DESCRIPTION OF THE DRAWINGS

These and other features, aspects, and advantages will become better understood with regard to the following description, appended claims, and accompanying drawings where:
Figure 1 shows a system for creating a virtual environment reconstruction of an actual location; and
Figure 2 shows a diagram for a method for creating a virtual environment reconstruction of an actual location using the system of Figure 1.

In the drawings, like parts are denoted by like reference numerals.

### DESCRIPTION

In the summary above, in this description, in the claims below, and in the accompanying drawings, reference is made to particular features (including method steps) of the invention. It is to be understood that the disclosure of the invention in this specification includes all possible combinations of such particular features. For example, where a particular feature is disclosed in the context of a particular aspect or embodiment of the invention, or a particular claim, that feature can also be used, to the extent possible, in combination with and/or in the context of other particular aspects and embodiments of the invention, and in the inventions generally.

The term "comprises" and grammatical equivalents thereof are used herein to mean that other components, ingredients, steps, et cetera are optionally present. For example, an article "comprising" (or "which comprises") components A, B, and C can consist of (that is, contain only) components A, B, and C, or can contain not only components A B, and C but also one or more other components.

Where reference is made herein to a method comprising two or more defined steps, the defined steps can be carried out in any order or simultaneously (except where the context excludes that possibility), and the method can include one or more other steps which are carried out before any of the defined steps, between two of the defined steps, or after all the defined steps (except where the context excludes that possibility).

The term "at least" followed by a number is used in to denote the start of a range beginning with that number (which may be a range having an upper limit or no upper limit, depending on the variable being defined). For example, "at least 1" means 1 or more than 1. The term "at most" followed by a number is used herein to denote the end of a range ending with that number (which may be a range having 1 or 0 as its lower limit, or a range having no lower limit, depending on the variable being defined) . For example, "at most 4" means 4 or less than 4, and "at most 40%" means 40% or less than 40%. When, in this specification, a range is given as "(a first number) to (a second number)" or "(a first number) - (a second number) ", this means a range whose lower limit is the first number and whose upper limit is the second number. For example, 25 to 100 mm means a range whose lower limit is 25 mm, and whose upper limit is 100 mm.

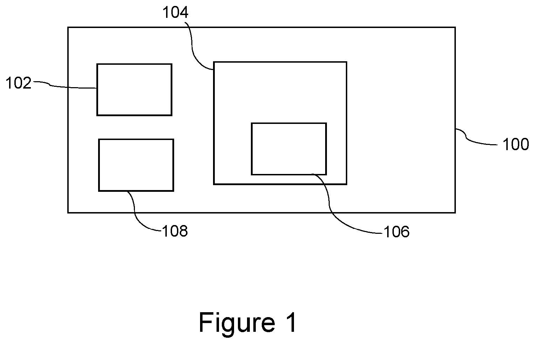

Figure 1 shows a system 100 for creating a virtual environment reconstruction of an actual location. The system 100 comprises an image capturing module 108, a processor 102 and a non-transitory computer-readable medium 104 with instructions 106 stored thereon. The instructions 106, when executed by the processor 102, performs a computer-implemented method 200 for creating a virtual environment reconstruction of an actual location. The image capturing module 108 may comprise at least one of an ultrasonic sensor, a LiDAR sensor, a radar sensor or a camera.

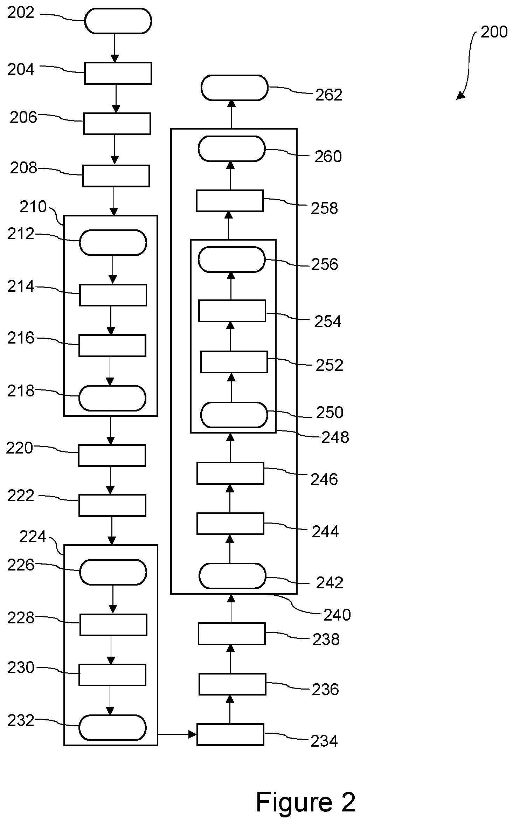

Figure 2 shows a diagram for the computer-implemented method 200 for creating a virtual environment reconstruction of an actual location using the system 100 of Figure 1. The steps or acts of the computer-implemented method 200 for creating a virtual environment reconstruction of an actual location may be performed by at least one processor 102, for instance, by the at least one processor 102 executing instructions stored on at least one non-transitory computer-readable medium 104.

At step 202, the system 100 initialises. The process from step 204 to step 238 may be understood to describe a training process of training the one or more machine learning systems of the system 100. Hence, the process from step 204 to step 238 is an iterative process that is performed until the one or more machine learning systems of the system 100 are trained. Since one or more machine learning systems are used, the virtual environment reconstruction of the actual location may advantageously be created without direct programming instructions. In other words, less reliance is placed on a human artist.

At step 204, The image capturing module 108 captures images of the actual location in the real world while the system 100 moves through or adopts several actual poses in the actual location. The actual location may be an outdoor location.

At step 206, a source digital pose, an intermediate digital pose and a target digital pose are selected. The source digital pose corresponds to a source actual pose in the actual location where source actual pose sensor data obtained at the source actual pose is available. The source actual pose sensor data may include data from at least one of an ultrasonic sensor, a LiDAR sensor, a radar sensor or a camera comprised in the image capturing module 108. The intermediate digital pose corresponds to an intermediate actual pose in the actual location where no intermediate actual pose sensor data is available. The target digital pose corresponds to a target actual pose in the actual location where target actual pose sensor data obtained at the target actual pose is available. A target image may comprise the target actual pose sensor data.

As used in the summary above, in this description, in the claims below, and in the accompanying drawings, when it is stated that a particular digital pose "corresponds" to a certain actual pose, it means that the particular digital pose adopted in the virtual environment reconstruction of the actual location matches a similar actual pose that would be adopted in the actual location in the real world. In other words, a certain actual position and a certain actual orientation of the actual location is simulated in the virtual environment reconstruction with a particular digital position and a particular digital orientation. Similarly, when it is stated that a particular digital scene "corresponds" to a specific image or specific actual pose sensor data, it means that the particular digital scene, either comprising a two-dimensional view or a three-dimensional view, of the virtual environment reconstruction created or reconstructed, matches an actual view, image or actual pose sensor data whether two-dimensional or three-dimensional, of the actual location in the real world. In other words, the particular digital scene is a recreation in the virtual environment of the specific image or specific actual pose sensor data.

At step 208, source digital scene data is obtained from the source actual pose sensor data obtained at the source actual pose. The source digital scene data obtained may comprise source digital scene RGBD data comprising data selected from the group consisting of red data, green data, blue data, depth data and combinations thereof. The red data, green data, blue data, or depth data can be conveniently obtained from a single device, such as an RGBD camera, or multiple devices, such as an RGB camera together with a LiDAR sensor. Thus, simulated three-dimensional virtual environment data may be obtained.

Alternatively, the source digital scene data obtained may comprise source digital scene RGB data comprising data selected from the group consisting of red data, green data, blue data and combinations thereof. Then, source digital scene depth data may be obtained using a first machine learning system, by inputting the source digital scene RGB data to the first machine learning system. One advantage of using a machine learning system is that the machine learning system may improve its performance through learning without direct programming instructions. Another advantage is that depth data may be simulated even when depth data are unavailable. The first machine learning system may also be configured to filter out noise or perform upsampling whenever necessary.

The first machine learning system may comprise a first neural network system. A neural network system may advantageously be trained to work fast and produce accurate results. Moreover, a neural network system is advantageously well suited for such complex applications. Furthermore, a neural network system may adopt a divide and conquer strategy when it is performing upsampling of depth data. The first machine learning system may also comprise a first convolutional neural network system.

At step 210, the source digital scene data is processed. The process of step 210 starts at step 212. At step 214, the source digital pose is transformed to the intermediate digital pose using the source digital scene data. Thus, movement from one pose to another pose may be simulated in the three-dimensional virtual environment reconstruction.

The source digital pose may be transformed to the intermediate digital pose by inputting the source digital scene data to a first geometric calculation module. Advantageously, geometric methods used to transform poses are accurate, reliable and suitable for use in simulated three-dimensional virtual environments. Moreover, geometric methods may produce spatially accurate digital scenes.

The first geometric calculation module may compute a first transformation matrix between the source digital pose and the intermediate digital pose. The first geometric calculation module then applies the first transformation matrix to the source digital scene depth data in order to obtain transformed source digital scene depth data.

Alternatively, the source actual pose may be transformed to the intermediate digital pose by inputting the source digital scene data to the first machine learning system. One advantage of using a machine learning system is that the machine learning system may improve its performance through learning without direct programming instructions. Moreover, it is convenient to use the same first machine learning system to transform poses and to obtain the source digital scene depth data.

However, a second machine learning system may also be used to transform the source actual pose to the intermediate digital pose, by inputting the source digital scene data to the second machine learning system. The second machine learning system may comprise a second neural network system. A neural network system may advantageously be trained to work fast and produce accurate results. Moreover, a neural network system is advantageously well suited for such complex applications. Furthermore, a neural network system may adopt a divide and conquer strategy when it is performing upsampling of depth data. The second machine learning system may also comprise a second convolutional neural network system.

Transformed source digital scene RGBD data comprising data selected from the group consisting of red data, green data, blue data, depth data and combinations thereof may be obtained from step 214. Thus, simulated three-dimensional virtual environment data may be obtained.

The transformed source digital scene depth data may be projected onto an intermediate digital scene using a first projection matrix in order to rasterise the transformed source digital scene RGBD data into a simulated three-dimensional virtual environment.

The process of step 210 proceeds to step 216, where the source digital scene data are inputted to the first machine learning system, the second machine learning system or a third machine learning system. The transformed source digital scene RGBD data may be inputted to the first machine learning system, the second machine learning system or the third machine learning system. One advantage of using a machine learning system is that the machine learning system may improve its performance through learning without direct programming instructions.

The third machine learning system may comprise a third neural network system. A neural network system may advantageously be trained to work fast and produce accurate results. Moreover, a neural network system is advantageously well suited for such complex applications. Furthermore, a neural network system may adopt a divide and conquer strategy when it is performing upsampling of depth data. The third machine learning system may also comprise a third convolutional neural network system.

Thereafter, the process of step 210 ends at step 218.

At step 220, the intermediate digital scene in the virtual environment reconstruction is reconstructed using the first machine learning system, the second machine learning system or the third machine learning system. The intermediate digital scene is created during the training process for training the one or more machine learning systems of the system 100. Thus, a three-dimensional digital scene may advantageously be reconstructed from data that may include the source digital scene data of the source digital scene from the source actual pose sensor data obtained at the source actual pose.

The intermediate digital scene may be reconstructed by obtaining intermediate digital scene data from the first machine learning system, the second machine learning system or the third machine learning system. Thus, the intermediate digital scene may advantageously be reconstructed from data that may include the source digital scene data of the source digital scene from the source actual pose sensor data obtained at the source actual pose. The intermediate digital scene data may comprise data selected from the group consisting of red data, green data, blue data, depth data and combinations thereof output from the first machine learning system, the second machine learning system or the third machine learning system. Hence, simulated three-dimensional virtual environment data may be obtained from the first machine learning system, the second machine learning system or the third machine learning system.

At step 222, the intermediate digital scene data of the intermediate digital scene taken at the intermediate digital pose in the virtual environment reconstruction is obtained. The intermediate digital scene data may comprise data selected from the group consisting of red data, green data, blue data, depth data and combinations thereof of the intermediate digital scene. Thus, simulated three-dimensional virtual environment data may be obtained.

At step 224, the intermediate digital scene data of the intermediate digital scene is processed. The process of step 224 starts at step 226. At step 228, the intermediate digital pose is transformed to the target digital pose using the intermediate digital scene data. Thus, movement from one pose to another pose may be simulated in the three-dimensional virtual environment reconstruction.

The intermediate digital pose may be transformed to the target digital pose by inputting the intermediate digital scene data to the first geometric calculation module or a second geometric calculation module. Advantageously, geometric methods used to transform poses are accurate, reliable and suitable for use in simulated three-dimensional virtual environments. Moreover, geometric methods may produce spatially accurate digital scenes.

The first geometric calculation module or the second geometric calculation module may compute a second transformation matrix between the intermediate digital pose and the target digital pose. The first geometric calculation module or the second geometric calculation module then applies the second transformation matrix to intermediate digital scene depth data in order to obtain transformed intermediate digital scene depth data.

Alternatively, the intermediate digital pose may be transformed to the target digital pose by inputting the intermediate digital scene data to the first machine learning system, the second machine learning system, the third machine learning system or a fourth machine learning system. One advantage of using a machine learning system is that the machine learning system may improve its performance through learning without direct programming instructions. Moreover, it is convenient to use the same machine learning system as any one of the previous steps.

The fourth machine learning system may comprise a fourth neural network system. A neural network system may advantageously be trained to work fast and produce accurate results. Moreover, a neural network system is advantageously well suited for such complex applications. Furthermore, a neural network system may adopt a divide and conquer strategy when it is performing upsampling of depth data. The fourth machine learning system may also comprise a fourth convolutional neural network system.

Transformed intermediate digital scene RGBD data comprising data selected from the group consisting of red data, green data, blue data, depth data and combinations thereof may be obtained from step 228. Thus, simulated three-dimensional virtual environment data may be obtained.

The transformed intermediate digital scene depth data may be projected onto a target digital scene using a second projection matrix in order to rasterise the transformed intermediate digital scene RGBD data into a simulated three-dimensional virtual environment.

The process of step 224 proceeds to step 230, where the intermediate digital scene data are inputted to the first machine learning system, the second machine learning system, the third machine learning system or the fourth machine learning system. The transformed intermediate digital scene RGBD data may be inputted to the first machine learning system, the second machine learning system, the third machine learning system or the fourth machine learning system. One advantage of using a machine learning system is that the machine learning system may improve its performance through learning without direct programming instructions. Thereafter, the process of step 224 ends at step 232.

At step 234, the target digital scene in the virtual environment reconstruction is reconstructed using the first machine learning system, the second machine learning system, the third machine learning system or the fourth machine learning system. The target digital scene may be reconstructed by obtaining target digital scene data comprising data selected from the group consisting of red data, green data, blue data, depth data and combinations thereof from the first machine learning system, the second machine learning system, the third machine learning system or the fourth machine learning system. Thus, simulated three-dimensional virtual environment data may be obtained. In addition, the target digital scene may advantageously be reconstructed from data that include the intermediate digital scene data of the intermediate digital scene taken at the intermediate digital pose in the virtual environment reconstruction where no intermediate actual pose sensor data is available.

This method advantageously allows the virtual environment reconstruction of the actual location to be created from data that include the intermediate digital scene data of the intermediate digital scene taken at the intermediate digital pose in the virtual environment reconstruction where no intermediate actual pose sensor data is available. Advantageously, the intermediate digital pose may be any randomly selected digital pose where no actual pose sensor data is available.

At step 236, an error feedback is derived. The error feedback may be derived by comparing the target digital scene with the target actual pose sensor data. The error feedback may also be derived by comparing the target digital scene with the target image. Thus, an objective standard is advantageously provided to assess the quality of the reconstructed digital scene of the reconstructed virtual environment. Each pixel of the target digital scene may be compared with a corresponding pixel of the target image, which, advantageously, may help produce spatially accurate digital scenes.

Alternatively, error feedback may be derived by assessing the quality of the target digital scene with an adversarial discriminator, which, advantageously, may produce more realistic or clearer digital scenes. Moreover, an objective standard is advantageously provided to assess the quality of the reconstructed digital scene of the reconstructed virtual environment. The adversarial discriminator may comprise a generative adversarial network comprising a fifth neural network system and a sixth neural network system, which, advantageously, may produce more realistic or clearer digital scenes. Moreover, the fifth neural network system and the sixth neural network system may be trained to make the reconstructed virtual environment look similar to the actual location.

Furthermore, error feedback may be derived by both comparing the target digital scene with the target actual pose sensor data and assessing the quality of the target digital scene with the adversarial discriminator. Thus, an objective standard is advantageously provided to assess the quality of the reconstructed digital scene of the reconstructed virtual environment.

Moreover, more realistic or clearer digital scenes may be produced.

At step 238, the parameters of the first machine learning system, the second machine learning system, the third machine learning system or the fourth machine learning system are changed based on the error feedback. Thus, an objective standard is advantageously provided to train the first machine learning system, the second machine learning system, the third machine learning system or the fourth machine learning system.

The process from step 204 to step 238 may be understood to describe the training process of training the one or more machine learning systems of the system 100. Hence, the process from step 204 to step 238 is an iterative process that is performed until the one or more machine learning systems of the system 100 are trained. Since one or more machine learning systems are used, the virtual environment reconstruction of the actual location may advantageously be created without direct programming instructions. In other words, less reliance is placed on a human artist.

At step 240, a desired digital pose in the virtual environment reconstruction of the actual location is created using the first machine learning system, the second machine learning system, the third machine learning system or the fourth machine learning system. The desired digital pose corresponds to a desired actual pose in the actual location where no desired actual pose sensor data is available. Advantageously, any digital pose with no available actual pose sensor data may be created to look similar to the desired actual pose using the trained first machine learning system, the trained second machine learning system, the trained third machine learning system or the trained fourth machine learning system.

The process of step 240 starts at step 242. At step 244, a proximate digital pose in the virtual environment reconstruction of the actual location is determined. The proximate digital pose corresponds to a proximate actual pose in the actual location where proximate actual pose sensor data obtained at the proximate actual pose is available. Advantageously, any nearby actual pose with available actual pose sensor data may be used to create the desired digital pose to look similar to the desired actual pose.

The proximate digital pose may be the digital pose with available actual pose sensor data that is nearest to the desired digital pose. Advantageously, a nearest actual pose with available actual pose sensor data may be suitable to be used to create the desired digital pose to look similar to the desired actual pose.

At step 246, proximate digital scene data of a proximate digital scene from the proximate actual pose sensor data obtained at the proximate actual pose are obtained. The proximate digital scene data obtained may comprise proximate digital scene RGBD data comprising data selected from the group consisting of red data, green data, blue data, depth data and combinations thereof. The red data, green data, blue data, or depth data can be conveniently obtained from a single device, such as an RGBD camera, or multiple devices, such as an RGB camera together with a LiDAR sensor. Thus, simulated three-dimensional virtual environment data may be obtained.

Alternatively, proximate digital scene depth data may be obtained using the first machine learning system. Proximate digital scene RGB data comprising data selected from the group consisting of red data, green data, blue data and combinations thereof of the proximate digital scene may be processed by the first machine learning system. The proximate digital scene RGB data may be inputted to the first machine learning system. The proximate digital scene RGBD data comprising data selected from the group consisting of red data, green data, blue data, depth data and combinations thereof may be obtained from the first machine learning system. Thus, depth data to be obtained even when depth data are unavailable. The trained first machine learning system may also be configured to filter out noise or perform upsampling whenever necessary.

At step 248, the proximate digital scene data of the proximate digital scene is processed. The process of step 248 starts at step 250. At step 252, the proximate digital pose is transformed to the desired digital pose using the proximate digital scene data. Thus, movement from one pose to another pose may be simulated in the three-dimensional virtual environment reconstruction.

The proximate digital pose may be transformed to the desired digital pose by inputting the proximate digital scene data to the first geometric calculation module or the second geometric calculation module. Advantageously, geometric methods used to transform poses are accurate, reliable and suitable for use in simulated three-dimensional virtual environments. Moreover, geometric methods may produce spatially accurate digital scenes.

The first geometric calculation module or the second geometric calculation module may compute a third transformation matrix between the proximate digital pose and the desired digital pose. The first geometric calculation module or the second geometric calculation module then applies the third transformation matrix to the proximate digital scene depth data in order to obtain transformed proximate digital scene depth data.

Alternatively, the proximate digital pose may be transformed to the desired digital pose by inputting the proximate digital scene data to the first machine learning system, the second machine learning system, the third machine learning system or the fourth machine learning system. Advantageously, a trained machine learning system may perform such complex operations fast and accurately.

Transformed proximate digital scene RGBD data comprising data selected from the group consisting of red data, green data, blue data, depth data and combinations thereof may be obtained from step 252. Thus, simulated three-dimensional virtual environment data may be obtained.

The transformed proximate digital scene depth data may be projected onto a desired digital scene using a third projection matrix in order to rasterise the transformed proximate digital scene RGBD data into a simulated three-dimensional virtual environment.

The process of step 248 proceeds to step 254, where proximate digital scene data are inputted to the first machine learning system, the second machine learning system, the third machine learning system or the fourth machine learning system. The transformed proximate digital scene RGBD data may be inputted to the first machine learning system, the second machine learning system, the third machine learning system or the fourth machine learning system. Thereafter, the process of step 248 ends at step 256.

The process of step 240 proceeds to step 258, where the desired digital scene in the virtual environment reconstruction is reconstructed using the first machine learning system, the second machine learning system, the third machine learning system or the fourth machine learning system. The desired digital scene may be reconstructed by obtaining desired digital scene data from the first machine learning system, the second machine learning system, the third machine learning system or the fourth machine learning system. The desired digital scene data obtained may comprise data selected from the group consisting of red data, green data, blue data, depth data and combinations thereof. Thus, simulated three-dimensional virtual environment data may be obtained. Moreover, a three-dimensional digital scene may advantageously be reconstructed from data that may include the proximate digital scene data of the proximate digital scene from the proximate actual pose sensor data obtained at the proximate actual pose. Advantageously, a trained machine learning system may perform such complex operations fast and accurately. Thereafter, the process of step 240 ends at step 260.

Finally, the method 200 ends at step 262.

Advantageously, the system 100 places less reliance on a human artist to reconstruct a virtual environment reconstruction of an actual location through direct programming instructions. Furthermore, the system 100 is advantageous over other techniques for creating a virtual environment reconstruction of an actual location that would not work well with sparse data of the actual location. In fact, the system 100 may conveniently be trained by moving the system 100 through the actual location once. Moreover, the system 100 may create the virtual environment reconstruction of the actual location using the source actual pose sensor data obtained at the source actual pose or the intermediate digital scene data, and the target actual pose sensor data obtained at the target actual pose. The system 100 has many potential uses, for example, the system 100 may be used to generate a digital scene of a blind spot, such as, under a hood of a vehicle comprising the system 100 or behind an obstacle.

Although the invention has been described in considerable detail with reference to certain embodiments or aspects, other embodiments or aspects are possible.

For example, instead of neural networks, other machine learning systems, such as decision tree, may be used.

Therefore, the scope of the appended claims should not be limited to the description of the embodiments contained herein.

## Claims

1. A computer-implemented method of creating a virtual environment reconstruction of an actual location, the method comprising, executing on at least one processor (102), the steps of:
selecting a source digital pose in the virtual environment reconstruction of the actual location, wherein the source digital pose corresponds to a source actual pose in the actual location where source actual pose sensor data obtained at the source actual pose is available; selecting an intermediate digital pose in the virtual environment reconstruction of the actual location,
wherein the intermediate digital pose corresponds to an intermediate actual pose in the actual location where no intermediate actual pose sensor data is available;
selecting a target digital pose in the virtual environment reconstruction of the actual location, wherein the target digital pose corresponds to a target actual pose in the actual location where target actual pose sensor data obtained at the target actual pose is available;
obtaining source digital scene data of a source digital scene from the source actual pose sensor data obtained at the source actual pose;
transforming from the source digital pose to the intermediate digital pose with the source digital scene data, wherein the step of transforming from the source digital pose to the intermediate digital pose comprises the steps of:
inputting the source digital scene data to a first machine learning system, and
reconstructing, using the first machine learning system, intermediate digital scene in the virtual environment reconstruction;
obtaining intermediate digital scene data of the intermediate digital scene taken at the intermediate digital pose in the virtual environment reconstruction;
processing the intermediate digital scene data of the intermediate digital scene by inputting the intermediate digital scene data to the first machine learning system; and
reconstructing, using the first machine learning system, a target digital scene at the target digital pose in the virtual environment reconstruction, wherein the target digital scene corresponds to the target actual pose sensor data of the actual location obtained at the target actual pose in the actual location; wherein the method further comprises the step of deriving an error feedback and the step of deriving the error feedback comprises the step of comparing the target digital scene with the target actual pose sensor data; and wherein the method further comprises the step of changing parameters of the first machine learning system based on the error feedback.

2. The method of claim 1, wherein the step of obtaining the intermediate digital scene data comprises the step of obtaining intermediate digital scene RGBD data comprising data selected from the group consisting of red data, green data, blue data, depth data and combinations thereof of the intermediate digital scene.

3. The method of any one of the preceding claims, wherein the step of transforming from the intermediate digital pose to the target digital pose further comprises the step of obtaining transformed intermediate digital scene RGBD data comprising data selected from the group consisting of red data, green data, blue data, depth data and combinations thereof.

4. The method of any one of the preceding claims, wherein the step of reconstructing the target digital scene comprises the step of obtaining target digital scene data comprising data selected from the group consisting of red data, green data, blue data, depth data and combinations thereof from the first machine learning system.

5. The method of any one of the preceding claims, wherein the step of obtaining the source digital scene data comprises the step of obtaining source digital scene RGBD data comprising data selected from the group consisting of red data, green data, blue data, depth data and combinations thereof from the source actual pose sensor data obtained at the source actual pose.

6. The method of any one of the preceding claims, wherein the step of obtaining the source digital scene data comprises the step of obtaining source digital scene depth data using a second machine learning system.

7. The method of any one of claims 1, wherein the step of deriving the error feedback comprises the step of assessing, using an adversarial discriminator, the quality of the target digital scene.

8. The method of any one of the preceding claims, further comprising the step of creating, using the first machine learning system, a desired digital pose in the virtual environment reconstruction of the actual location, wherein the desired digital pose corresponds to a desired actual pose in the actual location where no desired actual pose sensor data is available.

9. The method of claim 8, wherein the step of creating the desired digital pose comprises the step of determining a proximate digital pose in the virtual environment reconstruction of the actual location, wherein the proximate digital pose corresponds to a proximate actual pose in the actual location where proximate actual pose sensor data obtained at the proximate actual pose is available; preferably wherein the step of creating the desired digital pose further comprises the step of obtaining proximate digital scene data of a proximate digital scene from the proximate actual pose sensor data obtained at the proximate actual pose;
preferably wherein the step of creating the desired digital pose further comprises the step of processing the proximate digital scene data of the proximate digital scene;
preferably wherein the step of processing the proximate digital scene data comprises the step of transforming from the proximate digital pose to the desired digital pose with the proximate digital scene data; and
preferably wherein the step of processing the proximate digital scene data further comprises the step of inputting the proximate digital scene data to the first machine learning system.

10. The method of any one of claims 8-9, wherein the step of creating the desired digital pose further comprises the step of reconstructing, using the first machine learning system, a desired digital scene in the virtual environment reconstruction.

11. A non-transitory computer-readable medium (104) with instructions (106) stored thereon, that when executed by a processor (102), performs the method of any one of the preceding claims.

## Patentansprüche

1. Computerimplementiertes Verfahren zur Erzeugung einer Rekonstruktion einer virtuellen Umgebung eines tatsächlichen Standorts, wobei das Verfahren die folgenden Schritte aufweist, die auf mindestens einem Prozessor (102) ausgeführt werden:
Auswählen einer digitalen Quellpose bei der Rekonstruktion der virtuellen Umgebung des tatsächlichen Standorts, wobei die digitale Quellpose einer tatsächlichen Quellpose an dem tatsächlichen Standort entspricht, an dem Sensordaten der tatsächlichen Quellpose verfügbar sind, die an der tatsächlichen Quellpose erhalten werden; Auswählen einer digitalen Zwischenpose bei der Rekonstruktion der virtuellen Umgebung des tatsächlichen Standorts, wobei die digitale Zwischenpose einer tatsächlichen Zwischenpose an dem tatsächlichen Standort entspricht, an dem keine Sensordaten der tatsächlichen Zwischenpose verfügbar sind;
Auswählen einer digitalen Zielpose bei der Rekonstruktion der virtuellen Umgebung des tatsächlichen Standorts, wobei die digitale Zielpose einer tatsächlichen Zielpose an dem tatsächlichen Standort entspricht, an dem Sensordaten der tatsächlichen Zielpose verfügbar sind, die an der tatsächlichen Zielpose erhalten werden;
Erhalten von digitalen Quellszenendaten einer digitalen Quellszene aus den Sensordaten der tatsächlichen Quellpose, die an der tatsächlichen Quellpose erhalten werden;
Transformieren von der digitalen Quellpose in die digitale Zwischenpose mit den digitalen Quellszenendaten, wobei der Schritt des Transformierens von der digitalen Quellpose in die digitale Zwischenpose die folgenden Schritte aufweist:
Eingeben der digitalen Quellszenendaten in ein erstes System für maschinelles Lernen und
Rekonstruieren einer digitalen Zwischenszene bei der Rekonstruktion der virtuellen Umgebung unter Verwendung des ersten Systems für maschinelles Lernen;
Erhalten von digitalen Zwischenszenendaten der digitalen Zwischenszene, die an der digitalen Zwischenpose bei der Rekonstruktion der virtuellen Umgebung aufgenommen wird;
Verarbeiten der digitalen Zwischenszenendaten der digitalen Zwischenszene durch Eingeben der digitalen Zwischenszenendaten in das erste System für maschinelles Lernen; und
Rekonstruieren einer digitalen Zielszene an der digitalen Zielpose bei der Rekonstruktion der virtuellen Umgebung unter Verwendung des ersten Systems für maschinelles Lernen, wobei die digitale Zielszene den Sensordaten der tatsächlichen Zielpose des tatsächlichen Standorts entspricht, die an der tatsächlichen Zielpose an dem tatsächlichen Standort erhalten werden; wobei das Verfahren ferner den Schritt des Ableitens einer Fehlerrückmeldung aufweist und der Schritt des Ableitens der Fehlerrückmeldung den Schritt des Vergleichens der digitalen Zielszene mit den Sensordaten der tatsächlichen Zielpose aufweist; und
wobei das Verfahren ferner den Schritt des Änderns von Parametern des ersten Systems für maschinelles Lernen basierend auf der Fehlerrückmeldung aufweist.

2. Verfahren nach Anspruch 1, wobei der Schritt des Erhaltens der digitalen Zwischenszenendaten den Schritt des Erhaltens von RGBD-Daten der digitalen Zwischenszene aufweist, die Daten aufweisen, die aus der Gruppe ausgewählt werden, die aus Rot-Daten, Grün-Daten, Blau-Daten, Tiefendaten und Kombinationen davon der digitalen Zwischenszene besteht.

3. Verfahren nach einem der vorhergehenden Ansprüche, wobei der Schritt des Transformierens von der digitalen Zwischenpose in die digitale Zielpose ferner den Schritt des Erhaltens von RGBD-Daten der transformierten digitalen Zwischenszene aufweist, die Daten aufweisen, die aus der Gruppe ausgewählt werden, die aus Rot-Daten, Grün-Daten, Blau-Daten, Tiefendaten und Kombinationen davon besteht.

4. Verfahren nach einem der vorhergehenden Ansprüche, wobei der Schritt des Rekonstruierens der digitalen Zielszene den Schritt des Erhaltens von digitalen Zielszenendaten aufweist, die Daten aufweisen, die aus der Gruppe ausgewählt werden, die aus Rot-Daten, Grün-Daten, Blau-Daten, Tiefendaten und Kombinationen davon aus dem ersten System für maschinelles Lernen besteht.

5. Verfahren nach einem der vorhergehenden Ansprüche, wobei der Schritt des Erhaltens der digitalen Quellszenendaten den Schritt des Erhaltens von digitalen Quellszenen-RGBD-Daten aufweist, die Daten aufweisen, die aus der Gruppe ausgewählt werden, die aus Rot-Daten, Grün-Daten, Blau-Daten, Tiefendaten und Kombinationen davon aus den Sensordaten der tatsächlichen Quellpose besteht, die an der tatsächlichen Quellpose erhalten werden.

6. Verfahren nach einem der vorhergehenden Ansprüche, wobei der Schritt des Erhaltens der digitalen Quellszenendaten den Schritt des Erhaltens von Tiefendaten der digitalen Quellszene unter Verwendung eines zweiten Systems für maschinelles Lernen aufweist.

7. Verfahren nach einem der Ansprüche 1, wobei der Schritt des Ableitens der Fehlerrückmeldung den Schritt des Bewertens der Qualität der digitalen Zielszene unter Verwendung eines kontradiktorischen Diskriminators aufweist.

8. Verfahren nach einem der vorhergehenden Ansprüche, ferner aufweisend den Schritt des Erzeugens einer gewünschten digitalen Pose bei der Rekonstruktion der virtuellen Umgebung des tatsächlichen Standorts unter Verwendung des ersten Systems für maschinelles Lernen, wobei die gewünschte digitale Pose einer gewünschten tatsächlichen Pose an dem tatsächlichen Standort entspricht, an dem keine Sensordaten der gewünschten tatsächlichen Pose verfügbar sind.

9. Verfahren nach Anspruch 8, wobei der Schritt des Erzeugens der gewünschten digitalen Pose den Schritt des Bestimmens einer ungefähren digitalen Pose bei der Rekonstruktion der virtuellen Umgebung des tatsächlichen Standorts aufweist, wobei die ungefähre digitale Pose einer ungefähren tatsächlichen Pose an dem tatsächlichen Standort entspricht, an dem Sensordaten der ungefähren tatsächlichen Pose verfügbar sind, die an der ungefähren tatsächlichen Pose erhalten werden; wobei vorzugsweise der Schritt des Erzeugens der gewünschten digitalen Pose ferner den Schritt des Erhaltens von ungefähren digitalen Szenendaten einer ungefähren digitalen Szene aus den Sensordaten der ungefähren tatsächlichen Pose aufweist, die an der ungefähren tatsächlichen Pose erhalten werden;
wobei vorzugsweise der Schritt des Erzeugens der gewünschten digitalen Pose ferner den Schritt des Verarbeitens der ungefähren digitalen Szenendaten der ungefähren digitalen Szene aufweist;
wobei vorzugsweise der Schritt des Verarbeitens der ungefähren digitalen Szenendaten den Schritt des Transformierens von der ungefähren digitalen Pose in die gewünschte digitale Pose mit den ungefähren digitalen Szenendaten aufweist; und
wobei vorzugsweise der Schritt des Verarbeitens der ungefähren digitalen Szenendaten ferner den Schritt des Eingebens der ungefähren digitalen Szenendaten in das erste System für maschinelles Lernen aufweist.

10. Verfahren nach einem der Ansprüche 8-9, wobei der Schritt des Erzeugens der gewünschten digitalen Pose ferner den Schritt des Rekonstruierens einer gewünschten digitalen Szene bei der Rekonstruktion der virtuellen Umgebung unter Verwendung des ersten Systems für maschinelles Lernen aufweist.

11. Nichtflüchtiges computerlesbares Medium (104) mit darauf gespeicherten Anweisungen (106), die, wenn sie von einem Prozessor (102) ausgeführt werden, das Verfahren nach einem der vorhergehenden Ansprüche durchführen.

## Revendications

1. Procédé mis en œuvre par ordinateur de création d'une reconstruction d'environnement virtuel d'un emplacement réel, le procédé comprenant l'exécution sur au moins un processeur (102) des étapes consistant à :
sélectionner une pose numérique source dans la reconstruction d'environnement virtuel de l'emplacement réel, dans lequel la pose numérique source correspond à une pose réelle source dans l'emplacement réel où des données de capteur de pose réelle source obtenues au niveau de la pose réelle source sont disponibles ;
sélectionner une pose numérique intermédiaire dans la reconstruction d'environnement virtuel de l'emplacement réel, dans lequel la pose numérique intermédiaire correspond à une pose réelle intermédiaire dans l'emplacement réel où aucune donnée de capteur de pose réelle intermédiaire n'est disponible ;
sélectionner une pose numérique cible dans la reconstruction d'environnement virtuel de l'emplacement réel, dans lequel la pose numérique cible correspond à une pose réelle cible dans l'emplacement réel où des données de capteur de pose réelle cible obtenues au niveau de la pose réelle cible sont disponibles ;
obtenir des données de scène numérique source d'une scène numérique source à partir des données de capteur de pose réelle source obtenues au niveau de la pose réelle source ;
transformer la pose numérique source en pose numérique intermédiaire avec les données de scène numérique source, dans lequel l'étape de transformation de la pose numérique source en pose numérique intermédiaire comprend les étapes consistant à :
entrer les données de scène numérique source dans un premier système d'apprentissage machine, et
reconstruire, à l'aide du premier système d'apprentissage machine, une scène numérique intermédiaire dans la reconstruction d'environnement virtuel ;
obtenir des données de scène numérique intermédiaire de la scène numérique intermédiaire prise au niveau de la pose numérique intermédiaire dans la reconstruction d'environnement virtuel ;
traiter les données de scène numérique intermédiaire de la scène numérique intermédiaire en entrant les données de scène numérique intermédiaire dans le premier système d'apprentissage machine ; et
reconstruire, à l'aide du premier système d'apprentissage machine, une scène numérique cible au niveau de la pose numérique cible dans la reconstruction d'environnement virtuel, dans lequel la scène numérique cible correspond aux données de capteur de pose réelle cible de l'emplacement réel obtenues au niveau de la pose réelle cible dans l'emplacement réel ; dans lequel le procédé comprend en outre l'étape de déduction d'un retour d'informations d'erreurs et l'étape de déduction du retour d'informations d'erreurs comprend l'étape de comparaison de la scène numérique cible avec les données de capteur de pose réelle cible ; et dans lequel le procédé comprend en outre l'étape de modification des paramètres du premier système d'apprentissage machine sur la base du retour d'informations d'erreurs.

2. Procédé selon la revendication 1, dans lequel l'étape d'obtention des données de scène numérique intermédiaire comprend l'étape d'obtention de données RGBD de scène numérique intermédiaire comprenant des données sélectionnées dans le groupe constitué par des données de rouge, des données de vert, des données de bleu, des données de profondeur et des combinaisons de celles-ci de la scène numérique intermédiaire.

3. Procédé selon l'une quelconque des revendications précédentes, dans lequel l'étape de transformation de la pose numérique intermédiaire en pose numérique cible comprend en outre l'étape d'obtention des données RGBD de scène numérique intermédiaire transformées comprenant des données sélectionnées dans le groupe constitué par des données de rouge, des données de vert, des données de bleu, des données de profondeur et des combinaisons de celles-ci.

4. Procédé selon l'une quelconque des revendications précédentes, dans lequel l'étape de reconstruction de la scène numérique cible comprend l'étape d'obtention de données de scène numérique cible comprenant des données sélectionnées dans le groupe constitué par des données de rouge, des données de vert, des données de bleu, des données de profondeur et des combinaisons de celles-ci à partir du premier système d'apprentissage machine.

5. Procédé selon l'une quelconque des revendications précédentes, dans lequel l'étape d'obtention des données de scène numérique source comprend l'étape d'obtention de données RGBD de scène numérique source comprenant des données sélectionnées dans le groupe constitué par des données de rouge, des données de vert, des données de bleu, des données de profondeur et des combinaisons de celles-ci à partir des données de capteur de pose réelle source obtenues au niveau de la pose réelle source.

6. Procédé selon l'une quelconque des revendications précédentes, dans lequel l'étape d'obtention des données de scène numérique source comprend l'étape d'obtention des données de profondeur de scène numérique source à l'aide d'un second système d'apprentissage machine.

7. Procédé selon l'une quelconque des revendications 1, dans lequel l'étape de déduction du retour d'informations d'erreurs comprend l'étape d'évaluation, à l'aide d'un discriminateur antagoniste, de la qualité de la scène numérique cible.

8. Procédé selon l'une quelconque des revendications précédentes, comprenant en outre l'étape de création, à l'aide du premier système d'apprentissage machine, d'une pose numérique souhaitée dans la reconstruction d'environnement virtuel de l'emplacement réel, dans lequel la pose numérique souhaitée correspond à une pose réelle souhaitée dans l'emplacement réel où aucune donnée de capteur de pose réelle souhaitée n'est disponible.

9. Procédé selon la revendication 8, dans lequel l'étape de création de la pose numérique souhaitée comprend l'étape de détermination d'une pose numérique proche dans la reconstruction d'environnement virtuel de l'emplacement réel, dans lequel la pose numérique proche correspond à une pose réelle proche dans l'emplacement réel où des données de capteur de pose réelle proche obtenues au niveau de la pose réelle proche sont disponibles ; de préférence, dans lequel l'étape de création de la pose numérique souhaitée comprend en outre l'étape d'obtention de données de scène numérique proche d'une scène numérique proche à partir des données de capteur de pose réelle proche obtenues au niveau de la pose réelle proche ;
de préférence dans lequel l'étape de création de la pose numérique souhaitée comprend en outre l'étape de traitement des données de scène numérique proche de la scène numérique proche ;
de préférence dans lequel l'étape de traitement des données de scène numérique proche comprend l'étape de transformation de la pose numérique proche en pose numérique souhaitée avec les données de scène numérique proche ; et
de préférence dans lequel l'étape de traitement des données de scène numérique proche comprend en outre l'étape d'entrée des données de scène numérique proche dans le premier système d'apprentissage machine.

10. Procédé selon l'une quelconque des revendications 8 et 9, dans lequel l'étape de création de la pose numérique souhaitée comprend en outre l'étape de reconstruction, à l'aide du premier système d'apprentissage machine, d'une scène numérique souhaitée dans la reconstruction d'environnement virtuel.

11. Support lisible par ordinateur non transitoire (104) sur lequel sont stockées des instructions (106), qui, lorsqu'elles sont exécutées par un processeur (102), mettent en œuvre le procédé selon l'une quelconque des revendications précédentes.
